(19) Europäisches Patentamt / European Patent Office / Office européen des brevets

(11) **EP 1 049 944 B1**

(12) **FASCICULE DE BREVET EUROPEEN**

(45) Date de publication et mention de la délivrance du brevet:
**10.01.2007   Bulletin 2007/02**

(51) Int Cl.:
*G01S 13/95* [(2006.01)]     *G01S 7/02* [(2006.01)]

(21) Numéro de dépôt: **99900990.5**

(22) Date de dépôt: **22.01.1999**

(86) Numéro de dépôt international:
**PCT/FR1999/000134**

(87) Numéro de publication internationale:
**WO 1999/038028 (29.07.1999 Gazette 1999/30)**

(54) **TECHNIQUE POUR L'ESTIMATION DE PLUIE A PARTIR D'UN RADAR METEOROLOGIQUE A DIVERSITE DE POLARISATION**

REGENSCHÄTZUNGSTECHNIK FÜR METEOROLOGISCHES RADAR MIT POLARISATIONSDIVERSITÄT

TECHNIQUE FOR ESTIMATING RAINFALL FROM A METEOROLOGICAL RADAR WITH POLARISATION DIVERSITY

(84) Etats contractants désignés:
**DE ES FI FR GB IT**

(30) Priorité: **23.01.1998   FR 9800714**

(43) Date de publication de la demande:
**08.11.2000   Bulletin 2000/45**

(73) Titulaire: **CENTRE NATIONAL DE LA RECHERCHE SCIENTIFIQUE (CNRS) 75794 Paris Cedex 16 (FR)**

(72) Inventeurs:
• **ALI-MEHENNI, Mustapha F-78110 Le Vésinet (FR)**
• **OBLIGIS, Estelle F-78290 Croissy (FR)**
• **TESTUD, Jacques, Victor F-75017 Paris (FR)**

(74) Mandataire: **Texier, Christian et al Cabinet Régimbeau 20, rue de Chazelles 75847 Paris cedex 17 (FR)**

(56) Documents cités:
**US-A- 5 500 646**

• **GODDARD J W F ET AL: "TECHNIQUE FOR CALIBRATION OF METEOROLOGICAL RADARS USING DIFFERENTIAL PHSE" ELECTRONICS LETTERS, vol. 30, no. 2, 20 janvier 1994, page 166/167 XP000430583**
• **GORGUCCI E ET AL: "CALIBRATION OF RADARS USING POLARIMETRIC TECHNIQUES" IEEE TRANSACTIONS ON GEOSCIENCE AND REMOTE SENSING, vol. 30, no. 5, 1 septembre 1992, pages 853-857, XP000325070**

## Description

La présente invention est relative aux techniques météorologiques pour l'estimation d'un taux précipitant au moyen d'un radar.

Pour des raisons de coût, les radars du réseau européen fonctionnent en bande C, une fréquence sensiblement atténuée à travers les pluies internes, ce qui rend la restitution du taux précipitant plus délicate qu'en bande S où les effets d'atténuation sont plus limités.

Dans les applications à l'hydrologie urbaine, c'est même la bande X qui est envisagée, mais alors l'atténuation par la pluie joue un rôle très important, et sa prise en compte devient cruciale.

On pourra à cet égard avantageusement se référer à leur publication : HITSCHFELD - BORDAN, 1954, "Errors inherent in the radar measurement of rainfall at attenuating wavelengths", J. Meteor, 11, pp. 58-67.

Malheureusement, dans une application réelle où les données sont bruitées et où l'on peut être en présence d'une erreur d'étalonnage (même faible), cette solution se révèle numériquement instable.

Pour pallier cet inconvénient, il a déjà été proposé de fonctionner en diversité de polarisation et d'exploiter la réflectivité différentielle ZDR, qui est le rapport des réflectivités en polarisation H et V.

Au cours de sa chute, une goutte de pluie subit un aplatissement aérodynamique qui a pour conséquence que sa section efficace de diffusion est plus grande en polarisation H qu'en polarisation V. Dans un radar opérant à fréquence atténuée, le paramètre ZDR résulte de deux effets de tendances opposées : d'une part, l'effet de rétrodiffusion différentielle (tendant à accroître ZDR avec la taille moyenne des gouttes), et d'autre part l'effet d'atténuation différentielle (de tendance opposée).

Pour un exemple récent de détermination d'un taux précipitant à partir d'un radar à double polarisation, on pourra avantageusement se référer à la demande de brevet FR-2 742 876, ainsi qu'à la publication :

"Polarimetric Radar at Attenuated Wavelenghts as a Hydrological sensor" - M. SAUVAGEOT - Journal of etmosyheric and oceanic technology - vol. 13 - p. 630-637, 1996.

Toutefois, la mesure du coefficient ZDR n'est pas aisée.

La dynamique de variation de ZDR est d'environ 1 à 2 et couvre donc quelques dB tout au plus. En outre, cette mesure requiert un inter-étalonnage des voies H et V au dizième de dB ; l'intégration sur de nombreux échantillons indépendants pour tempérer la fluctuation statistique du signal, et de très bonnes performances de l'antenne (lobes secondaires à 30 dB - aller - en dessous du lobe principal).

En alternative, il a également été proposé, notamment par la publication :

"Differential propagation phase shift and rainfall rate estimation" - M. SACHINANDA, D.S. ZRNIC - Radio science - vol. 21, n°2, p. 235-247, March-April 1986.

d'exploiter un autre paramètre, à savoir la phase différentielle (notée $\Phi dp$). En effet, l'aplatissement de la goutte de pluie n'affecte pas seulement la section efficace de rétrodiffusion induisant la dissymétrie $\sigma_H > \sigma_V$ (où $\sigma_H$ et $\sigma_V$ représentent les sections efficaces en polar H et V, respectivement), mais aussi la propagation de l'onde radar dont le vecteur d'onde est affecté tant pour sa partie imaginaire (l'atténuation spécifique est plus forte en polarisation H qu'en polarisation V, effet d'atténuation différentielle précédemment mentionné), que pour sa partie réelle (où la dissymétrie entre H et V se traduit par une variation différentielle de la phase le long du trajet. Or, la dérivée de $\Phi dp$ le long du rayon (taux de variation de $\Phi dp$, notée Kdp) est quasi-proportionnelle au taux précipitant (et donc $\Phi dp$, au taux précipitant intégré), ce qui explique l'intérêt de le mesurer.

L'estimateur de Kdp présente de nombreux avantages : il est insensible à l'atténuation le long du trajet ; il est insensible à une erreur d'étalonnage du radar ; il est beaucoup moins affecté que ZDR par les lobes secondaires de l'antenne ; il n'est aucunement affecté par un masque partiel du faisceau d'antenne (ce qui arrive systématiquement quand on opère à faible élévation).

Il présente cependant l'inconvénient majeur d'être fortement bruité car il résulte de la dérivation le long du faisceau de $\Phi dp$. La mesure de Kdp requiert donc un long temps d'intégration, incompatible avec l'application hydrologique qui impose un balayage rapide du faisceau radar.

L'invention propose quant à elle une technique qui permet de pallier les inconvénients des techniques antérieures et qui met en oeuvre un traitement simple, fiable et robuste, en particulier vis-à-vis du bruit statistique de mesure (ce qui permet un balayage rapide).

Plus particulièrement, l'invention propose un procédé pour l'estimation d'un taux précipitant au moyen d'un radar bipolaire selon la revendication 1.

Notamment, on détermine une estimation de la valeur $K(r_0)$ de l'atténuation en $r_0$ à partir de l'équation :

$$K(r_0)\int_{r_1}^{r_0}\frac{Z^b(s)}{Z^b(r_0)+K(r_0).I(s,r_0)}.ds = \gamma.(\phi_{dp}(r_0)-\phi_{dp}(r_1))$$

où : $I(s,r) = 0.46b\int_s^{r_0} Z^b(u)du$ et b est l'exposant de la relation puissance

$$K(r) = aZ(r)^b$$

et où $\gamma$ est le paramètre de proportionnalité entre l'atténuation spécifique et le taux de variation différentiel de la phase.

De préférence, on détermine une estimation K(r) de l'atténuation spécifique en fonction de r à partir de l'équation

$$\frac{Z^b(r)}{K(r)} - \frac{Z^b(r_0)}{K(r_0)} = I(r,r_0).$$

Avantageusement, on mesure la réflectivité atténuée Z pour l'une et l'autre des deux polarisations H ou V et on détermine pour l'une et l'autre de ces deux polarisations le taux précipitant R(r) pour un rayon de trajet donné r.

L'invention concerne également un dispositif pour l'estimation d'un taux précipitant comportant un radar bipolaire, ainsi que des moyens de traitement, caractérisé en ce que ledit radar comporte des moyens pour la mesure de la phase différentielle Φdp et de la réflectivité atténuée Z selon au moins l'une des polarisations H ou V et en ce que les moyens de traitement mettent en oeuvre les différentes étapes de traitement du procédé selon la revendication 1.

D'autres caractéristiques et avantages de l'invention ressortiront encore de la description qui suit, laquelle est purement illustrative et non limitative et doit être lue en regard des dessins annexés sur lesquels :

- les figures 1a et 1b sont des graphes sur lesquels on a porté des diagrammes de dispersion illustrant la pertinence d'une représentation paramétrique utilisée dans un mode de mise en oeuvre de l'invention ;
- la figure 2 illustre un dispositif pour la mise en oeuvre du procédé conforme à l'invention ;
- les figures 3a à 3c, 4a à 4c, 5a à 5c sont des graphes, dans lesquels on a supposé que le faisceau radar intercepte deux cellules de pluie de forme gaussienne sur lesquels on a porté les paramètres Z, K et R pour différentes valeurs du paramètre $N_0^*$ (défini plus loin dans la description) de distribution dimensionnelle des gouttes de pluie.
- la figure 6 est un graphe sur lequel on a porté une simulation de variations pour le coefficient $N_0^*$ en fonction du rayon de trajet r

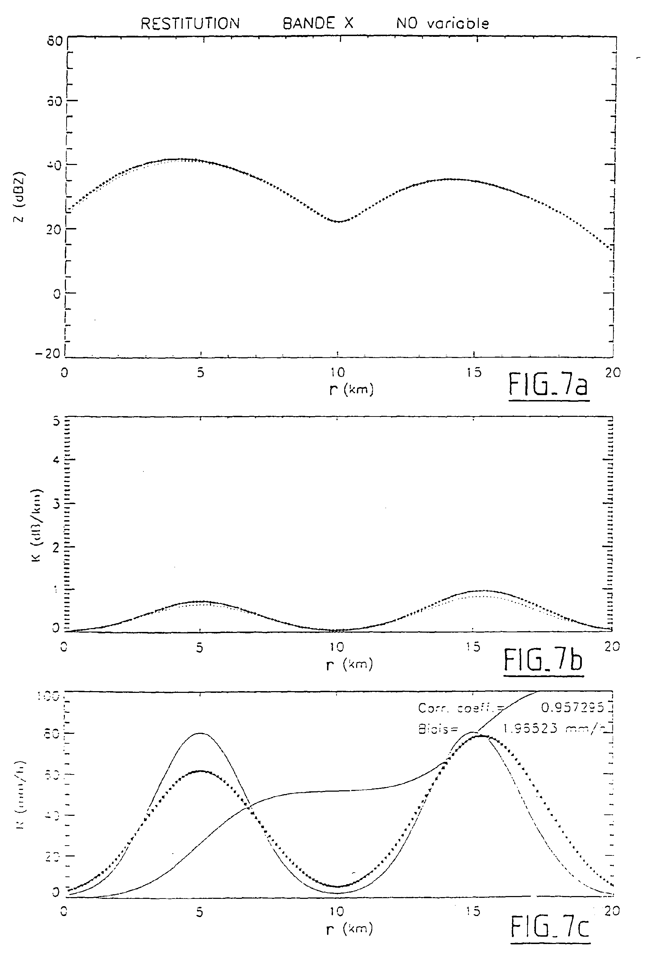

- les figures 7a à 7c sont des graphes sur lesquels on a porté, pour le cas où $N_0^*$ est variable, les valeurs obtenues pour les paramètres Z, K et R ;
- les figures 8a à 8c et les figures 9a à 9c sont des graphes sur lesquels on a porté les paramètres Z, K et R obtenus pour des biais absolus de 2dB et 5 dB respectivement et pour une valeur de $N_0$ et une prise égale à 8000 ;
- les figures 10a à 10c et 11a à 11c sont des figures semblables à celles des figures 8a à 8c et 9a à 9c dans le cas de biais relatifs pris respectivement égaux à 0.2 dB et 0.5 dB ;
- les figures 12a à 12c et 13a à 13c sont des graphes sur lesquels on a porté les valeurs obtenues pour les paramètres Z, K et R dans le cas de restitution à partir d'un nombre d'échantillons égal à 60 et d'un nombre d'échantillons égal à 10 ;
- les figures 14a à 14c sont des graphes sur lesquels on a porté les valeurs obtenues pour les paramètres Z, K et R dans le cas d'un taux de pluie maximum de 200 mm/heure et d'un signal bruité ;
- les figures 15a à 15d sont des histogrammes illustrant une technique d'étalonnage possible ;
- les figures 16a à 16c sont des diagrammes de dispersion illustrant une autre technique d'étalonnage possible.

Le procédé qui va maintenant être décrit met en oeuvre un traitement sur la phase différentielle Φdp et la réflectivité atténuée $Z_H$ (ou $Z_V$) selon la polarisation H (ou V) (réflectivité Z dans la suite du texte).

Dans une première étape, on détermine pour la distance radiale r à partir de l'antenne radar un intervalle [$r_1$,

$r_0$], dans lequel les données Z et Φdp sont disponibles continuellement.

On sait que l'équation d'Hitschfeld - Bordan s'écrit :

$$u^{b-1}\frac{du}{dr} = -0.46aZ^b \tag{1}$$

avec $u = Z/Z_0$ où $Z_0$ est la réflectivité non atténuée et Z la réflectivité apparente, et où a et b sont les deux paramètres de la loi de puissance $K = a Z_0^b$, dans laquelle K est l'atténuation spécifique. On rappelle que a est fortement variable, tandis que b est stable.

La solution de cette équation (1) est, lorsque l'on intègre entre deux bornes $r_1$ et $r_2$ :

$$\left[u^b\right]_{r_1}^{r_2} = -0.46ab\int_{r_1}^{r_2} Z^b ds \tag{2}$$

En exprimant (2) entre r et $r_0$, il vient :

$$\frac{Z^b(r)}{K(r)} - \frac{Z^b(r_0)}{K(r_0)} = I(r,r_0) \tag{3}$$

où

$$I(r,r_0) = 0.46b\int_r^{r_0} Z^b\ ds \tag{4}$$

et où $K = a Z_0^b$

L'équation (3) fournit un estimateur de K(r) que l'on va chercher à contraindre par l'information de Φdp en ajustant $K(r_0)$. Pour cela on transforme (3) en

$$K(r) = K(r_0)\frac{Z^b(r)}{Z(r_0) + K(r_0).I(r,r_0)} \tag{5}$$

Or, la dérivée de la phase Φdp par rapport au trajet r, ou taux de variation de la phase différentielle Kdp, est une fonction quasi-linéaire de l'atténuation spécifique K (c'est-à-dire $K_H$ ou $K_V$, selon la polarisation sur laquelle on travaille).

Par conséquent,

$$\int_{r_1}^{r_0} K(s)ds = \gamma(\phi_{dp}(r_0) - \phi_{dp}(r_1)) \tag{6}$$

où $\gamma$ est un paramètre de proportionnalité connu

soit :

$$K(r_0) \int_{r_1}^{r_0} \frac{Z^b(s)}{Z(r_0) + K(r_0)I(s,r_0)} . ds = \gamma . ( \phi_{dp}(r_0) - \phi_{dp}(r_1)) \quad (7)$$

soit, après intégration :

$$K(r_0) = \frac{Z^b(r_0)}{I(r_1,r_0)} \left\{ 10^{0.2b.\gamma.\Delta\Phi} - 1 \right\} \quad (8)$$

où

$$\Delta\Phi = \Phi_{dp}(r_0) - \Phi_{dp}(r_1).$$

A partir de cette estimation de $K(r_0)$, on détermine $K(r)$ en tout point de l'intervalle $[r_1, r_0]$ à partir de l'équation (3).

On trouve ainsi :

$$K(r) = \frac{Z^b(r).\left\{ 10^{0.2b.\gamma.\Delta\Phi} - 1 \right\}}{I(r,r_0) + \left\{ 10^{0.2b.\gamma.\Delta\Phi} - 1 \right\} I(r,r_0)} \quad (9)$$

On remarque que l'intérêt de cette formulation est d'une part, qu'elle fournit une solution $K(r)$ indépendante du paramètre a qui est précisément le plus fluctuant, et d'autre part, qu'elle fait appel à une mesure différentielle de la phase différentielle, beaucoup plus aisée à atteindre qu'une mesure absolue.

Ceci permet d'estimer la valeur du taux précipitant $R(r)$, en utilisant par exemple à cet effet des abaques donnant $R(r)$ en fonction de $K(r)$ pour plusieurs valeurs du paramètre a, lequel peut être lui-même déterminé à partir de la relation :

$$K(r_0) = a \, Z_0 (r_0)^b$$

En mettant en oeuvre le traitement qui vient d'être décrit pour l'une et l'autre des deux polarisations H et V, on dispose, in fine, de deux estimations de R qu'il est possible de croiser pour valider une valeur finale.

Dans une variante de mise en oeuvre permettant une plus grande finesse d'analyse encore on utilise les relations paramétriques « universelles » entre la réflectivité vraie (non atténuée) $Z_0$ ($mm^6.m^{-3}$), l'atténuation spécifique K ($db.km^{-1}$), la phase différentielle spécifique $K_{DP}$ ($deg.km^{-1}$), et le taux précipitant R ($mm.hr^{-1}$); que l'on écrit :

$$K = a \left[ N_0^{\bullet} \right]^{(1-b)} . Z_o^b$$

$$R = c \left[ N_0^{\bullet} \right]^{(1-d)} . K^d$$

$$K = \underline{\gamma}\,K_{DP}$$

$$2$$

où les paramètres a, b, c, d, $\gamma$ sont connus (pour une température donnée), et où $N_0^*$ est un paramètre caractéristique de la distribution dimensionnelle N(D) [densité numérique des gouttes de pluie par intervalle de diamètre en $m^{-4}$] des gouttes de pluie que l'on se propose de déterminer par l'algorithme $N_0^*$ ($m^{-4}$) s'exprime en fonction du contenu en eau liquide W ($g/m^{-3}$) et du diamètre volumique médian $D_0$ comme :

$$N_0^{\bullet} = [181/(\pi\rho_w)]W / D_0^{\ 4}$$

(où $\rho_w$ est la densité de l'eau en $g/m^3$).

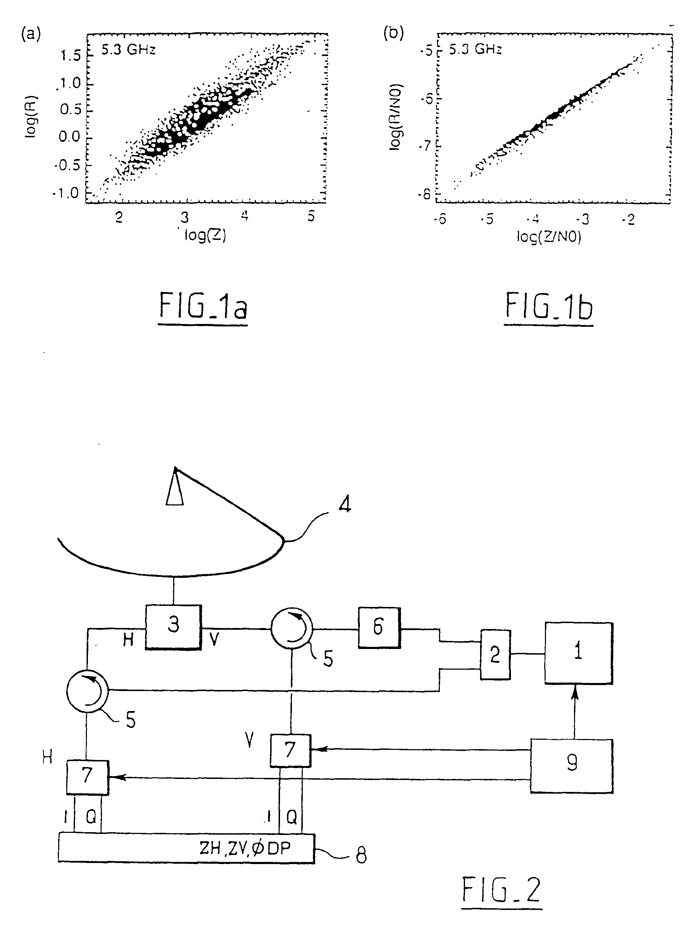

la pertinence de cette représentation paramétrique est illustrée par les figures 1a et 1b sur lesquelles on a respectivement représenté d'une part le diagramme de dispersion de la relation R-Z obtenue à partir de 11853 spectres N(D) mesurés par sonde in situ au cours de l'expérience aéroportée TOGA-COARE et d'autre part le même diagramme après normalisation de chacun des paramètres par $N_0^*$ (l'expérience TOGA-COARE a eu lieu dans la Pacifique ouest entre novembre 1992 et février 1993, le capteur PMS étant monté sur l'avion Electra du NCAR. Le traitement primaire des données a été fait par R. BLACK de la NOAA (HRD Miami). Les données sont disponibles sur le serveur du HRD Miami).

Un estimateur de $N_0^*$ est donné par :

$$N_0^{\bullet} = \left[ a^{-1} \frac{K(r_0)}{Z^b(r_0) + K(r_0).I(r_1,r)} \right]^{\frac{1}{1-b}} \qquad (10)$$

On calcule alors R(r) entre $r_1$ et $r_0$ en reportant K(r) et la valeur de $N_0^*$ dans la relation :

$$R = c[N_0^{\bullet}]^{(1-d)}.K^d \qquad (11)$$

Le traitement qui vient d'être décrit a été testé avec un appareillage du type de celui illustré sur la figure 2 qui comprend :

- un émetteur 1 ;
- un diviseur de puissance 2 à 3dB recevant le signal en sortie de l'émetteur 1 ;
- un extracteur de mode (ou orthomode) 3 relié par deux voies H et V aux sorties d'un diviseur de puissance 2 ;
- une antenne 4 à cornet transmettant ou recevant les deux polarisations H et V ;
- des circulateurs 5 (té de filtrage) interposés, sur les voies H et V, entre l'extracteur de mode 3 et le diviseur de puissance 2 ;
- un déphaseur 6 interposé, sur la voie V, entre le diviseur de puissance 2 et l'extracteur de mode 3 ;
- des moyens de réception 7 reliés, pour les voies H et V, aux circulateurs 5 ;
- un oscillateur 9 qui synchronise l'émetteur 1 et les moyens de réception 9 ;
- des moyens 8 d'échantillonnage, puis de traitement des sorties I et Q de ces moyens de réception 7, ces moyens de traitement 8 permettant la détermination à partir des paramètres ZH, ZV et ΦDP, lesquels vérifient en notation complexe:

$$Z_{H, V} = [I_{II, V}^2 + Q_{H, V}^2]^{1/2} \quad et \quad \Phi DP = 1 \ arg \ [(I_H + iQ_H).(I_V - iQ_V)]$$

où $I_{H, V}$ et $Q_{H,V}$ sont les valeurs obtenues par échantillonnage des sorties I et Q des voies H et V.

Ce sont ces moyens de traitement 8 qui mettent en oeuvre le traitement de détermination qui a été décrit ci-dessus.

Les paramètres de fonctionnement de ce dispositif étaient les suivants :

- seuil de détection du radar à 0 dB SNR et à 10 km : 0 dBZ ;
- nombre d'échantillons indépendants $N_i$ dans la cellule de résolution : 10 ou 60
- résolution radiale : 75 mètres
- bruit sur la mesure de $\Phi_{DP}$ : $\pm$ 1 degré (pour $N_i$=60), et $\pm$ 3 degrés (pour $N_i$=10)
- distribution dimensionnelle des gouttes exponentielle : $N(D) = N_0 \exp (-\Lambda D)$ [où D est le diamètre moyen des gouttes et où diamètre $\Lambda$ est un paramètre], avec $N_0$ constant le long de la radiale (avec les valeurs suivantes : 800, 8000 [valeur de Marshall et Palmer], 80000, ou continûment variable proportionnellement à R.

Dans ces conditions, les différents résultats suivants ont été obtenus :

1) $N_0^*$ constant.

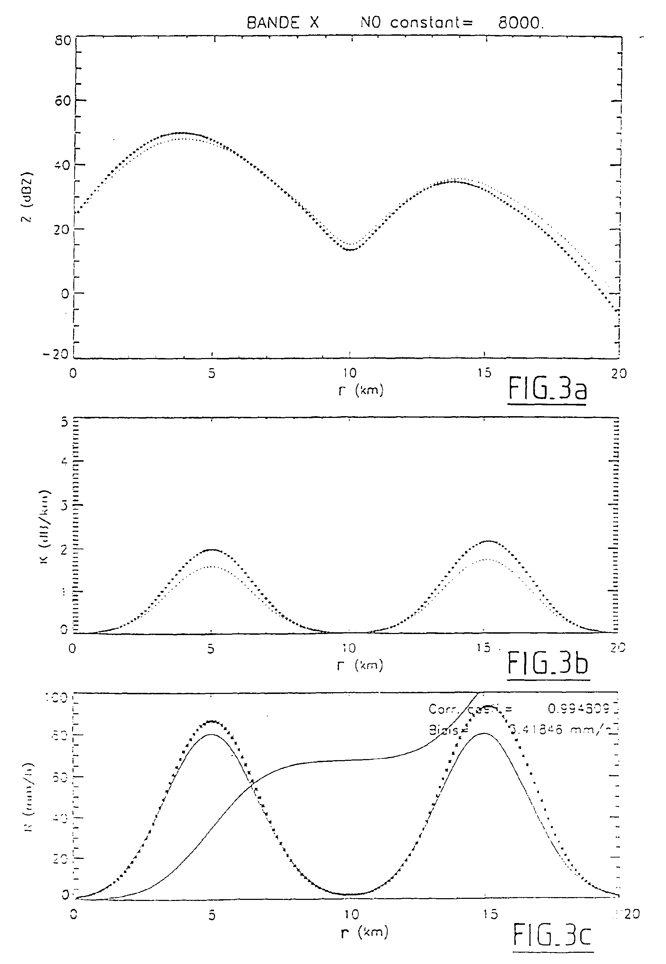

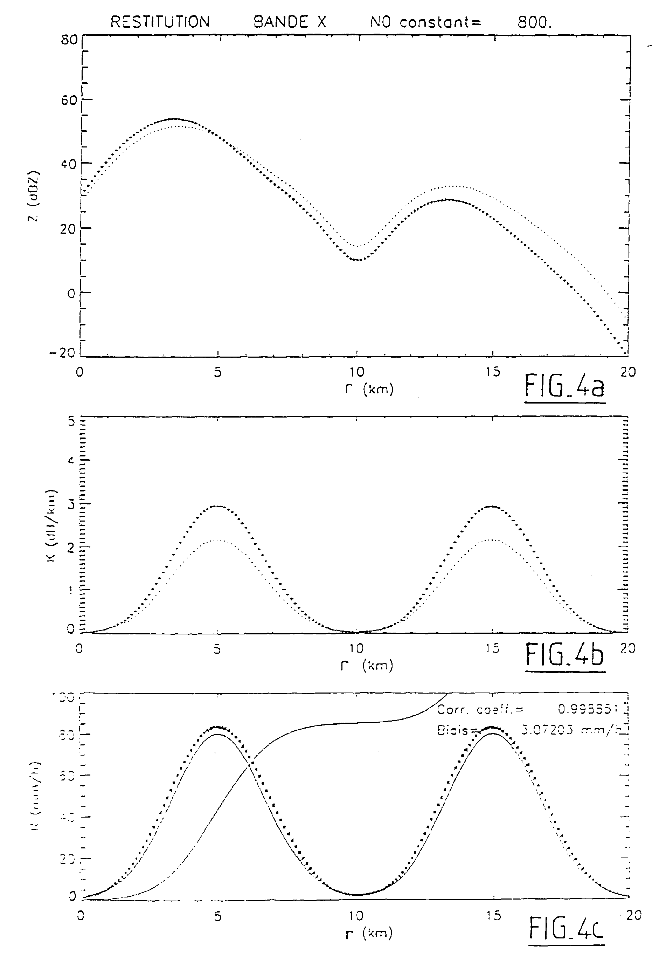

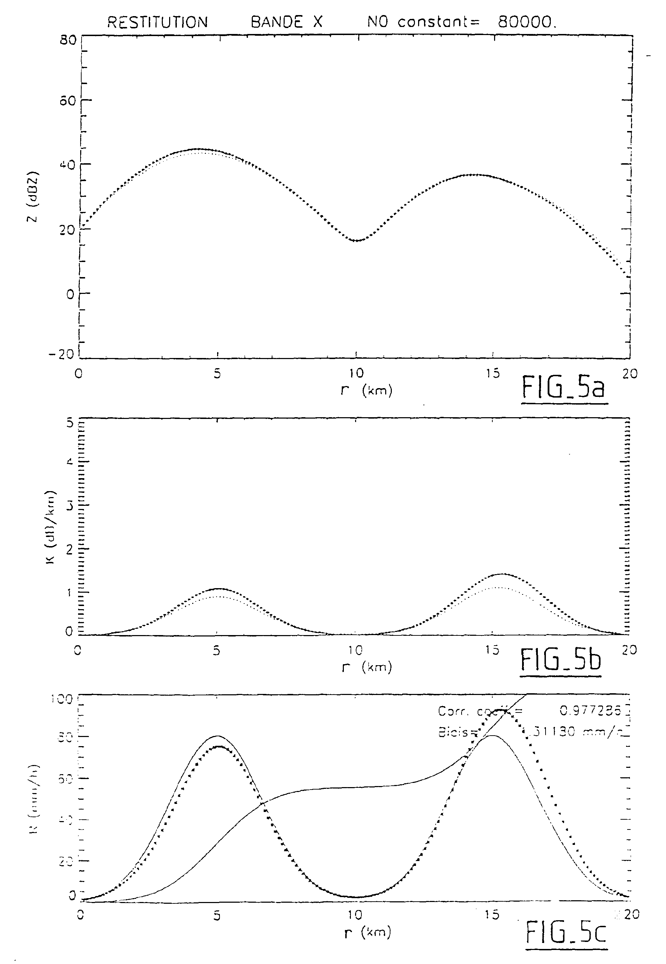

Les figures 3a à 3c, 4a à 4c, 5a à 5c présentent les taux de pluie restitués pour un $N_0^*$ constant sur la radiale et valant respectivement 800, 8000, 80000 Dans ces 3 cas, on voit que les taux de pluie restitués sont très proches des taux de pluie simulés, et que la valeur du paramètre $N_0^*$ restituée est à chaque fois relativement proche de celle utilisée pour les simulations.

2) $N_0^*$ variant avec le taux de pluie.

Les inventeurs ont également testé le traitement sur des simulations toujours réalistes mais réalisées avec un $N_0^*$ dépendant du taux de pluie, ce qui est assez conforme à la réalité mais qui rend "assez périlleuse" la restitution du taux précipitant. La relation utilisée entre $N_0^*$ et le taux précipitant est la suivante :

$$N_0^* = \frac{10^{\log (R) + 6.6}}{1000}.$$

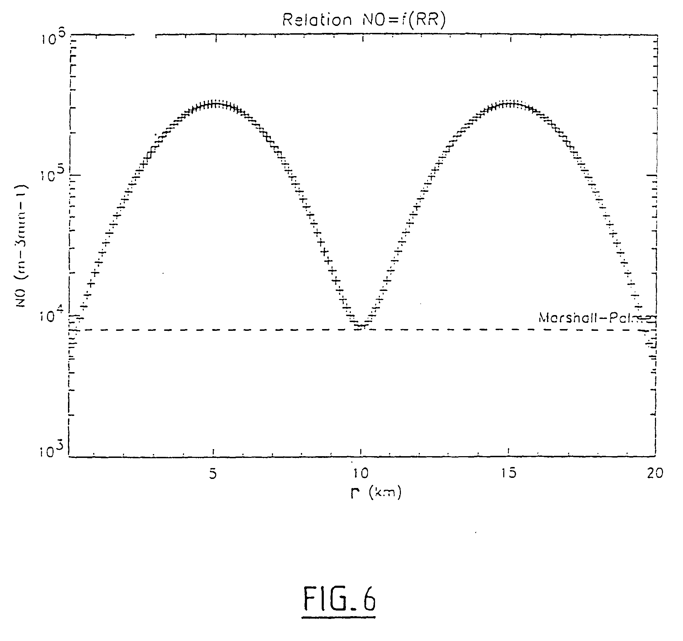

Pour des taux de pluie variant de 0 à 80 mm/h, on voit que le paramètre $N_0^*$ explore une très large gamme, couvrant plus d'une décade. A titre d'indication, on a représenté sur la figure 6 les variations de $N_0^*$ sur la radiale simulée. Les restitutions obtenues avec le traitement précédemment décrit sont présentées sur les figures 6a à 6c. L'écart maximum observé est de l'ordre de 20%, ce qui semble raisonnable dans le cas de simulations "aussi défavorables".

3) Effets des biais relatif et absolu.

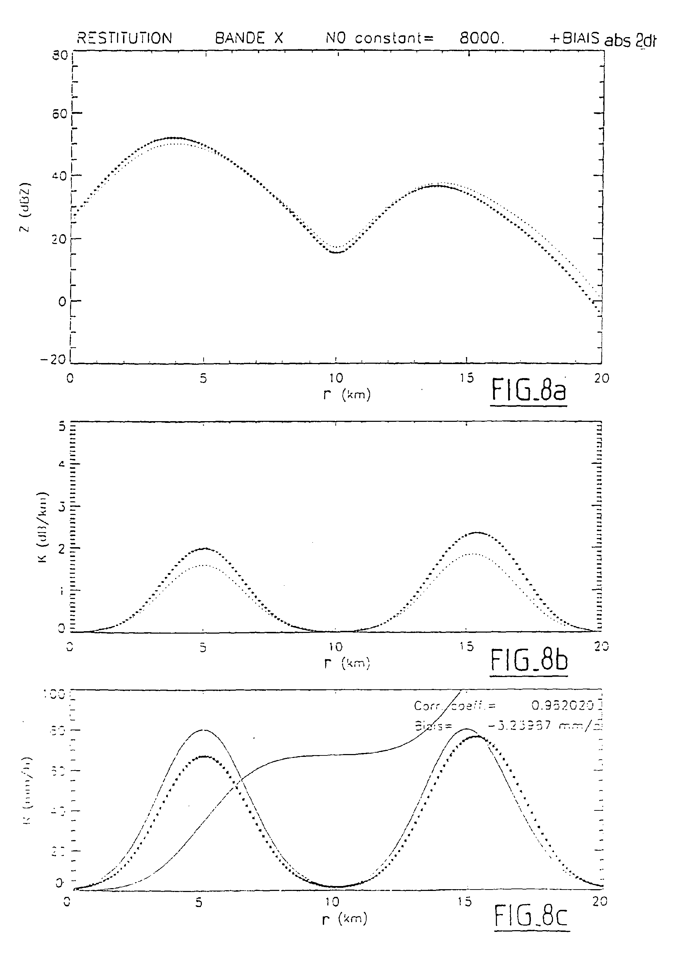

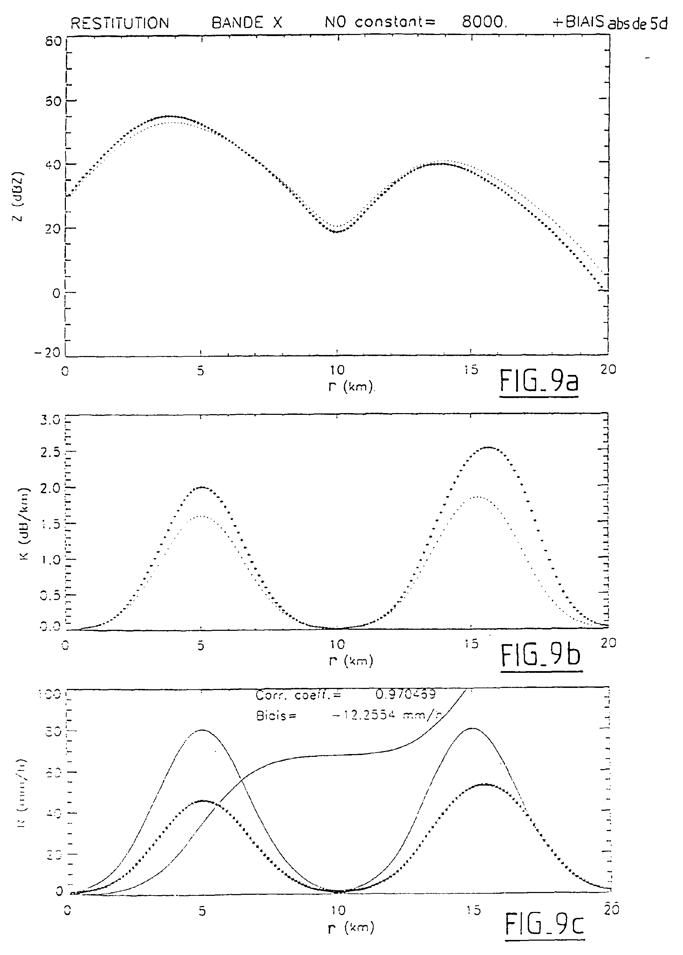

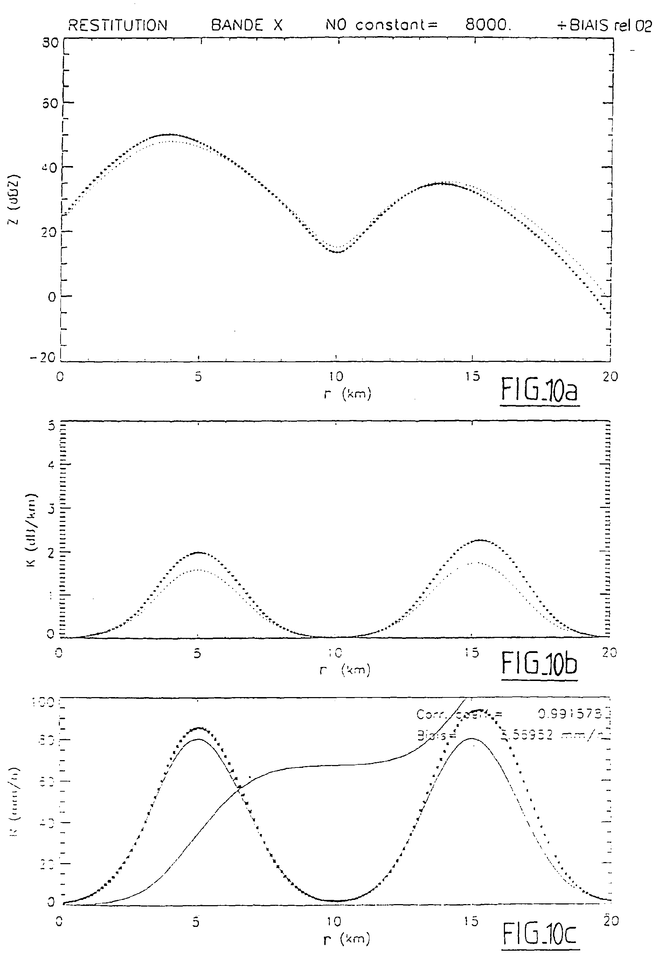

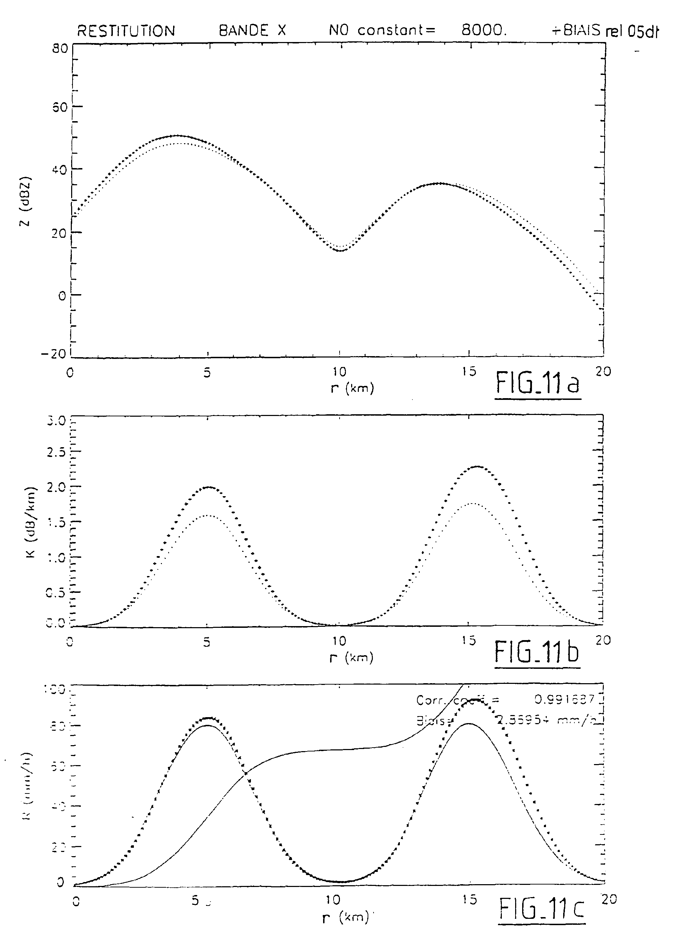

Les figures 8a à 8c et 9 à 9c présentent les résultats obtenus avec un biais absolu de 2dB et de 5dB respectivement. Une valeur de biais absolu de 2dB induit une erreur non négligeable sur l'estimation du paramètre $N_0^*$, mais ne pénalise pas la restitution, puisque les taux de pluie restitués ne diffèrent de ceux qui ont été simulés que de quelques pourcents. En revanche, un biais absolu de 5dB semble rédhibitoire. Les résultats obtenus dans le cas de biais relatifs de 0.2 dB et de 0.5 dB et qui sont présentés sur les figures 10a à 10c et 11 à 11c, montrent la faible sensibilité de cet algorithme à une erreur d'étalonnage relative entre les deux polarisations.

4) Effets du bruit.

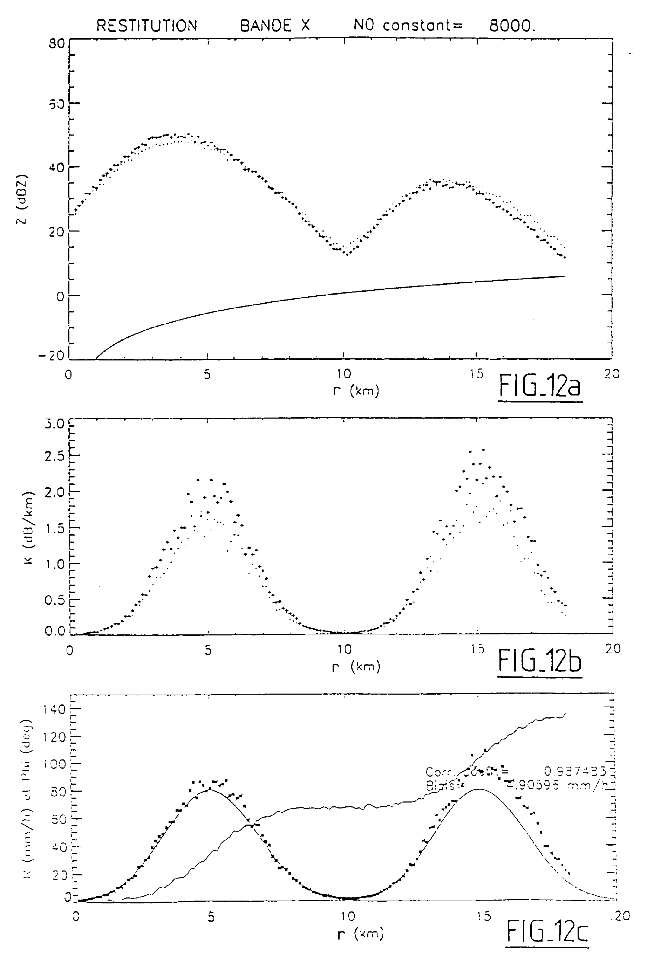

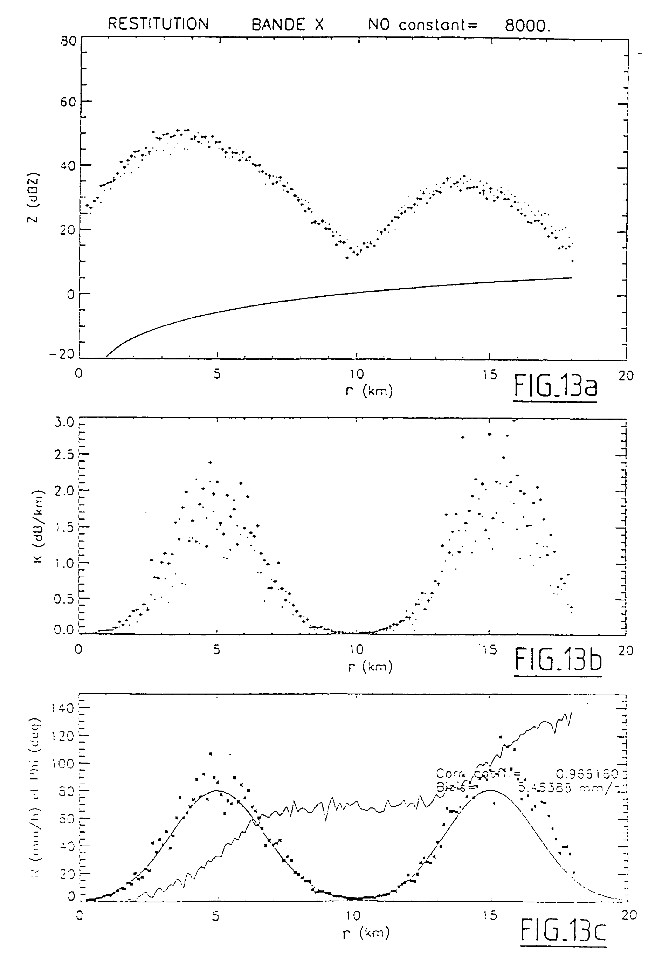

Les inventeurs ont testé l'effet du bruit sur les restitutions dans le cas d'un nombre d'échantillons de 60 (figures 12a à 12c) et dans le cas plus défavorable de 10 échantillons (figures 13a à 13c). Dans ces deux cas, la mesure la mesure de la phase intégrée présente un bruit de 3 degrés. La restitution est réalisée tant que le rapport signal à bruit est suffisant. Pour un taux de pluie maximum de 80 mm/h, c'est le cas jusqu'à une distance radiale d'environ 19 km. Les résultats obtenus confirment le comportement très stable de l'algorithme KDP. Dans ces conditions des coefficients de corrélation supérieurs à 0.95 et des biais inférieurs à 4 mm/h sont tout à fait satisfaisants.

5) <u>Cas de très forts taux de pluie</u>

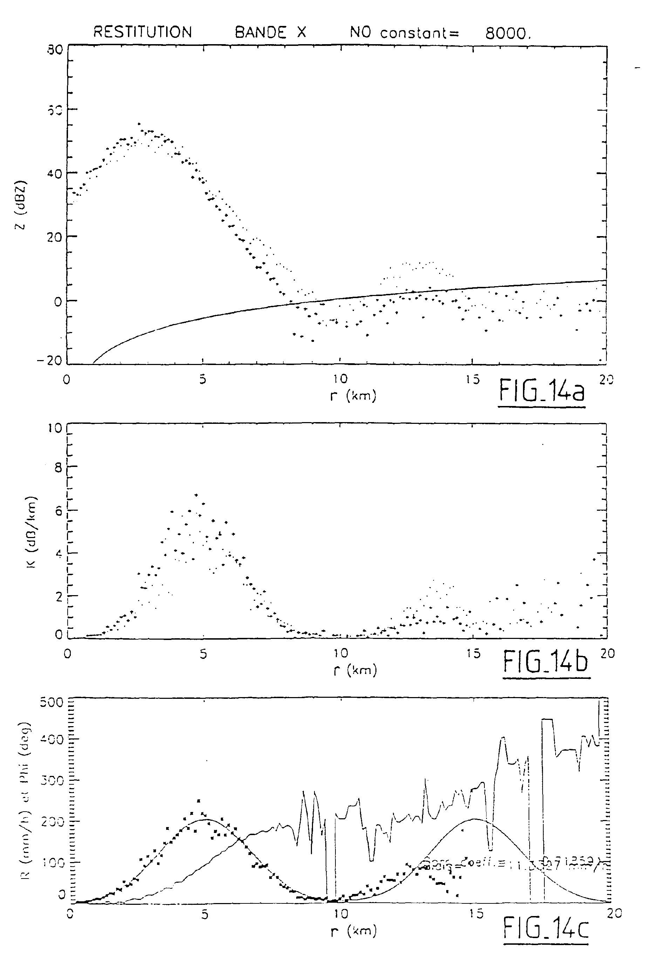

Les inventeurs ont vérifié la robustesse de l'algorithme dans le cas de forts taux de pluie, atteignant 200 mm/h et un signal bruité. Dans ce cas, le signal se noie assez rapidement dans le bruit, et évidemment il devient impossible de restituer la deuxième cellule de précipitations à cause de la très forte atténuation du signal radar par la première. Cependant les taux de pluie obtenus jusqu'à environ 10 km sont cohérents et l'ensemble de la première cellule précipitante est très convenablement restitué (figures 14a à 14c).

Le traitement a également été testé dans d'autres bandes que la bande X et notamment en bande C et en bande S. Les résultats obtenus sont tout aussi satisfaisants qu'en bande X.

Ainsi, avec le traitement qui vient d'être décrit, on dispose d'un estimateur du taux précipitant qui est particulièrement stable vis-à-vis du bruit et/ou du biais sur les réflectivités et sur la phase. Ce traitement parvient, y compris dans les cas difficiles (fort taux de pluie, $N_0^*$ variant rapidement avec le taux de pluie) à restituer le taux de pluie de manière très encourageante.

Le traitement des données est possible aussi longtemps que le rapport signal à bruit est supérieur à 1. Dans ces conditions, le biais sur l'estimateur de R n'excède pas 5%, et son écart type 10%. La performance de l'estimateur est indépendante de $N_0^*$ (quand on le suppose constant le long de la radiale), et n'est que légèrement détériorée dans les conditions de $N_0^*$ variable. Un étalonnage absolu du radar à $\pm$ 2 ou 3 dBZ suffit pour assurer ces performances. Cet étalonnage n'est requis qui pour affiner la relation R-K à partir de laquelle on procède à l'estimée de R. Aucune spécification n'est requise en ce qui concerne l'étalonnage relatif des voies H et V.

Plusieurs techniques d'étalonnage peuvent être envisagées.

Selon l'une d'elle, on compare l'histogramme des $N_0^*$ observés par spectropluviomètre au sol, avec l'histogramme des $N_0^*$ restitués par le radar sur un grand nombre de rayons. En présence d'une erreur d'étalonnage de la réflectivité $\delta C$ on mesure alors $\delta C.Z$ croyant mesurer Z), l'estimateur de $N_0^*$ donné par (10) est alors multipliée par le facteur $(\delta C)^{-b/(1-b)}$.

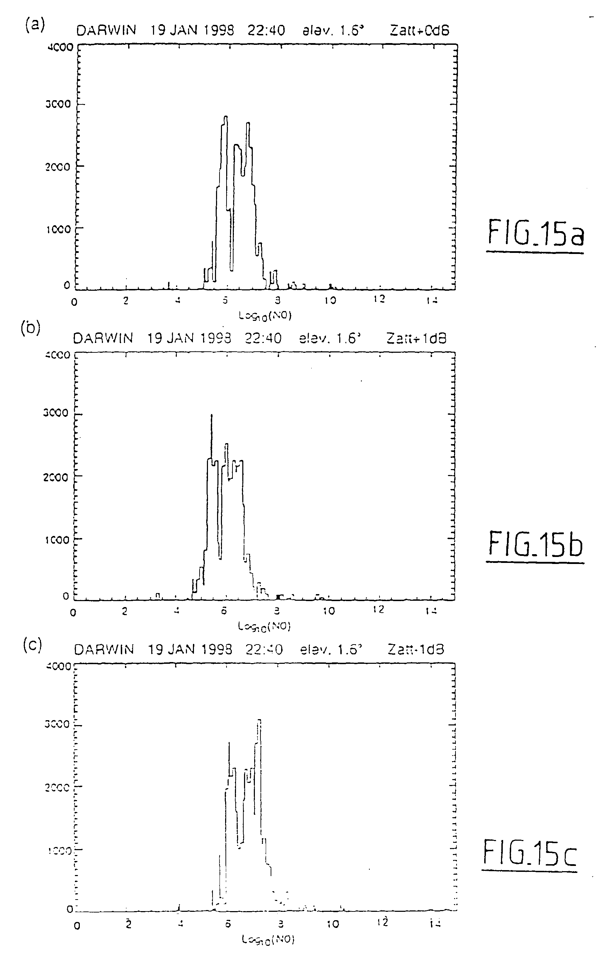

En corrélant l'histogramme mesuré au sol, et celui mesuré par le radar, on détermine $\delta C$. Si l'on ne dispose pas de spectropluviomètre au sol, on peut obtenir un étalonnage assez précis en imposant que l'histogramme des $N_0^*$ mesuré par le radar soit centré sur la valeur de Marshall et Palmer ($N_0^* = 0.8\ 10^7\ m^{-4}$) après re-étalonnage. Une illustration de cette technique d'étalonnage est donnée dans les figures 15a à 15c qui représentent l'histogramme de $N_0^*$ restitués à partir d'un balayage volumique du radar de Darwin (radar bande C polarimétrique), (a) en laissant les réflectivités mesurées en l'état, (b), en les relevant de 1dB, (c), en les rabaissant de 1 dB.

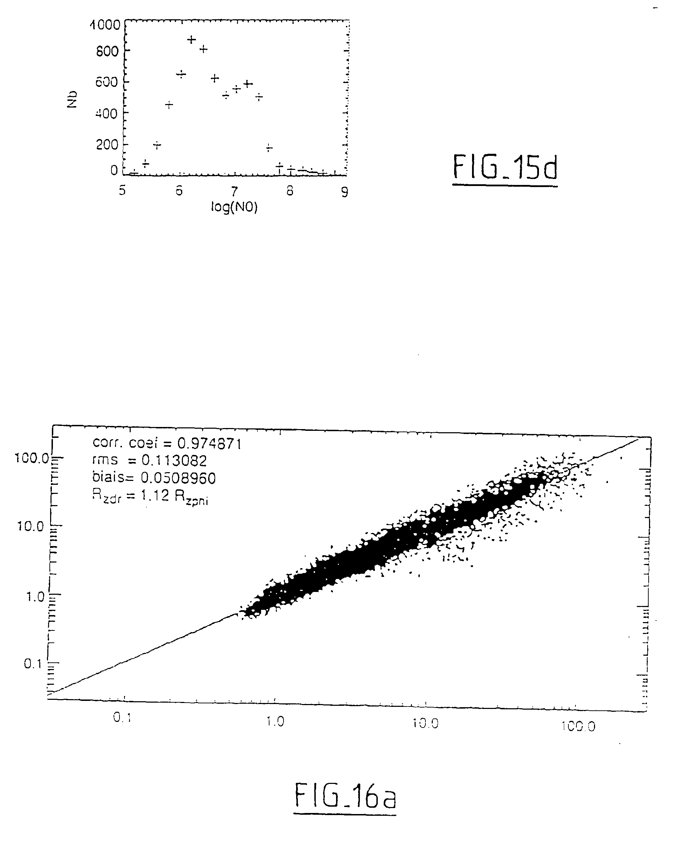

En comparant ces histogrammes à l'histogramme de $N_0^*$ « réel » i.e. déterminé dans la même région à partir de données aéroportées de TOGA-COARE (voir figure 15d), on voit que l'abaissement de 1 dB permet de conformer l'histogramme obtenu avec le traitement proposé par l'invention et l'histogramme réel.

Selon une autre technique d'étalonnage, qui complète avantageusement les techniques qui viennent d'être décrites, on utilise les autres relations « universelles » suivantes :

(i) entre R, K et ZDR (où ZDR = ZH/ZV)

$$R = K.(ZDR)^f \qquad (12)$$

(ii) entre l'atténuation différentielle $K_H$-$K_V$ et l'atténuation en polarisation H, $K_H$ :

$$K_H - K_V = \alpha[\dot{N_0}]^{1-\beta}K_H{}^{\beta} \qquad (13)$$

Où $\alpha$, $\beta$, et f sont des paramètres connus.

On calcule ZDR par :

$$ZDR = ZDR_a . 10^{\int_{r_1}^{r_0} \alpha \dot{V_0}^{1-\beta} K^{\beta} dr} \qquad (14)$$

puis l'on calcule R par (12).

On compare alors statistiquement (dans un diagramme de dispersion) deux estimateurs indépendants du taux précipitant (l'estimateur (12) et celui donné par (11)).

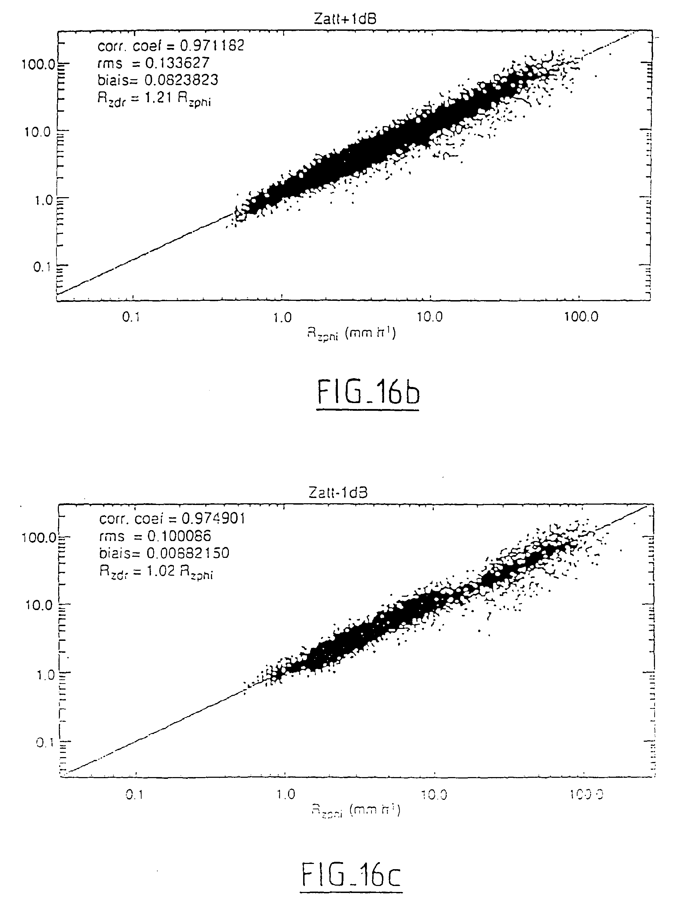

On ajuste alors δC pour obtenir la cohérence optimale. Pour le même ensemble de données les diagrammes de dispersion donnés sur les figures 16a à 16c illustrent cette technique.

Sur la figure 16a, on a porté un diagramme de dispersion entre l'estimateur (11) [déduit de K uniquement], et l'estimateur (12) [déduit de K et de ZDR]. Ici les réflectivités mesurées sont utililsées en l'état, et l'on remarque que (12) surestime de 12% par rapport à (11).

Sur la figure 16b, on a porté un diagramme de dispersion entre l'estimateur (11) [déduit de K uniquement], et l'estimateur (12) [déduit de K et ZDR]. Ici, les réflectivités mesurées sont relevées de 1 dB, et l'on remarque que (12) surestime de 21% par rapport à (11).

Sur la figure 16c, on a porté un diagramme de dispersion entre l'estimateur (11) [déduit de K uniquement], et l'estimateur (12) [déduit de K et ZDR]. Ici, les réflectivités mesurées sont abaissées de 1 dB, et l'on remarque la parfaite conformité (à 2% près) entre (11) et (12).

Ainsi, la meilleure cohérence est obtenue à nouveau en considérant un abaissement des réflectivités de 1 dB.

L'estimateur de taux de pluie qui vient d'être décrit est particulièrement avantageux dans le cas de l'estimation de la pluie sur les bassins versants pour la surveillance des crues et la gestion des ressources en eau. Cette surveillance et cette gestion reposent aujourd'hui sur des modèles de ruissellement/infiltration dont la principale limitation quant à la performance prédictive tient à une mauvaise connaissance de la lame d'eau entrant dans le système.

## Revendications

1. Procédé pour l'estimation d'un taux précipitant au moyen d'un radar bipolaire, selon lequel on mesure au moyen dudit radar bipolaire la réflexivité atténuée Z selon au moins l'une des polarisations H ou V, **caractérisé par** les différentes étapes suivantes :

   - on mesure au moyen dudit radar bipolaire, sur un intervalle $[r_1, r_0]$ donné de rayon r de trajet par rapport audit radar, la phase différentielle Φdp ainsi que la réflectivité atténuée Z selon au moins l'une des polarisations H ou V,
   - on détermine une estimation de la valeur $K(r_0)$ de l'atténuation en $r_0$ à partir de l'équation :

$$K(r_0)\int_{r_1}^{r_0} \frac{Z^b(s)}{Z^b(r_0) + K(r_0).I(s,r_0)}.ds = \gamma.(\phi_{dp}(r_0) - \phi_{dp}(r_1))$$

où : $I(s,r_0) = 0.46b\int_s^{r_0} Z^b(u)du$ et b est l'exposant de la relation puissance

$$K(r) = a[Z_0(r)]^b \quad (Z_0 : \text{réflectivité non atténuée})$$

et où γ est le paramètre de proportionnalité entre l'atténuation spécifique et le taux de variation différentiel de la phase,

2. Procédé selon la revendication 1, **caractérisé en ce qu'**on détermine une estimation K(r) de l'atténuation spécifique en fonction de r à partir de l'équation

$$\frac{Z^b(r)}{K(r)} - \frac{Z^b(r_0)}{K(r_0)} = I(r,r_0).$$

**3.** Procédé selon l'une des revendications précédentes, **caractérisé en ce qu'**on détermine le taux de précipitant R (r) à partir de la relation

$$R = c[N_0{}^*]^{(1-d)}.K^d.$$

où c et d sont des paramètres et où $N_0{}^*$ est donné par :

$$N_0^{\bullet} = \left[ a^{-1} \frac{K(r_0)}{Z^b(r_0) + K(r_0).I(r_1, r_0)} \right]^{\frac{1}{1-b}}$$

**4.** Procédé selon la revendication 1, **caractérisé en ce qu'**on mesure la réflectivité atténuée Z pour l'une et l'autre des deux polarisations H ou V et **en ce qu'**on détermine pour l'une et l'autre de ces deux polarisations le taux précipitant R(r) pour un rayon de trajet donné r.

**5.** Procédé selon l'une des revendications précédentes, **caractérisé en ce qu'**on met en oeuvre un étalonnage par comparaison des histogrammes estimés avec un histogramme réel.

**6.** Procédé selon l'une des revendications 1 à 4, **caractérisé en ce qu'**on met en oeuvre un étalonnage par centrage d'un histogramme sur la valeur de Marshall et Palmer.

**7.** Procédé selon l'une des revendications précédentes, **caractérisé en ce qu'**on met en oeuvre un étalonnage par comparaison statistique entre deux estimateurs indépendants du taux précipitant.

**8.** Dispositif pour l'estimation d'un taux précipitant comportant un radar bipolaire, ainsi que des moyens de traitement, **caractérisé en ce que** ledit radar comporte des moyens pour la mesure de la phase différentielle Φdp et de la réflectivité atténuée Z selon au moins l'une des polarisations H ou V et **en ce que** les moyens de traitement mettent en oeuvre les différentes étapes de traitement du procédé selon l'une des revendications précédentes.

**Claims**

**1.** Process for estimating a precipitation rate by means of a bipolar radar, according to which the attenuated reflexivity according to at least one of the polarizations H or V is measured by means of said bipolar radar, **characterized by** the following various steps:

- the differential phase Φdp and the attenuated reflectivity Z according to at least one of the polarizations H or V are measured by means of said bipolar radar, over a given interval $[r_1, r_0]$ of path radius r with respect to said radar,
- an estimate of the value $K(r_0)$ of the attenuation at $r_0$ is determined from the equation

$$K(r_0)\int_{r_1}^{r_0} \frac{Z^b(s)}{Z^b(r_0) + K(r_0).I(s, r_0)} ds = \gamma.(\phi_{dp}(r_0) - \phi_{dp}(r_1))$$

where: $I(s, r_0) = 0.46b \int_s^{r_0} Z^b(u)du$ and b is the exponent of the power relation

$$K(r) = a [Z_0(r)]^b \quad (Z_0:\text{unattenuated reflectivity})$$

and where $\gamma$ is the parameter of proportionality between the specific attenuation and the differential rate of variation of the phase.

2. Process according to Claim 1, **characterized in that** an estimate K(r) of the specific attenuation is determined as a function of r from the equation

$$\frac{Z^b(r)}{K(r)} - \frac{Z^b(r_0)}{K(r_0)} = I(r, r_0)$$

3. Process according to either of the preceding claims, **characterized in that** the rate of precipitation R(r) is determined from the relation

$$R = c \, [N_0{}^*]^{(1-d)} \cdot K^d$$

where c and d are parameters and where $N_0{}^*$ is given by:

$$N_0{}^* = \left[ a^{-1} \frac{K(r_0)}{Z^b(r_0) + K(r_0) \, I(r_1, r_0)} \right]^{\frac{1}{1-b}}$$

4. Process according to Claim 1, **characterized in that** the attenuated reflectivity Z is measured for both of the two polarizations H or V and **in that** the precipitation rate R(r) for a given path radius r is determined for both of these two polarizations.

5. Process according to one of the preceding claims, **characterized in that** a calibration is effected by comparing the estimated histograms with an actual histogram.

6. Process according to one of Claims 1 to 4, **characterized in that** a calibration is effected by centering the histogram on the Marshall and Palmer value.

7. Process according to one of the preceding claims, **characterized in that** a calibration is effected by statistical comparison between two independent estimators of the precipitation rate.

8. Device for estimating a precipitation rate comprising a bipolar radar, as well as processing means, **characterized in that** said radar comprises means for measuring the differential phase Φdp and the attenuated reflectivity Z according to at least one of the polarizations H or V and **in that** the processing means implement the various processing steps of the process according to one of the preceding claims.

**Patentansprüche**

1. Verfahren zur Schätzung einer Niederschlagsrate mittels eines bipolaren Radars, bei dem mittels des bipolaren Radars die abgeschwächte Reflektivität Z gemäß wenigstens einer der Polarisationen H oder V gemessen wird, und das durch die verschiedenen folgenden Schritte gekennzeichnet ist:

- Messen der differentiellen Phase Φdp sowie der abgeschwächten Reflektivität Z mittels des bipolaren Radars, auf einem gegebenen Intervall $[r_1, r_0]$ des Strahls r der Strecke bezüglich des Radars, gemäß wenigstens einer der Polarisationen H oder V,

- Bestimmen einer Schätzung des Werts $K(r_0)$ der Abschwächung in $r_0$ aus der Gleichung:

$$K(r_0)\int_{r_1}^{r_0} \frac{Z^b(s)}{Z^b(r_0) + K(r_0)I(s,r_0)}\,ds = \gamma \cdot (\phi_{dp}(r_0) - \phi_{dp}(r_1))$$

wobei:

$$I(s,r_0) = 0.46b \int_{s}^{r_0} Z^b(u)\,du$$

und b der Exponent der Potenzrelation

$$K(r) = a[Z_0(r)]^b$$

ist ($Z_0$: nichtabgeschwächte Reflektivität) und wobei $\gamma$ der Proportionalitätsparameter zwischen der spezifischen Abschwächung und der differentiellen Änderungsrate der Phase ist.

2. Verfahren gemäß Anspruch 1, **dadurch gekennzeichnet, dass** man eine Abschätzung K(r) der spezifischen Abschwächung in Abhängigkeit von r aus der Gleichung

$$\frac{Z^b(r)}{K(r)} - \frac{Z^b(r_0)}{K(r_0)} = I(r,r_0)$$

bestimmt.

3. Verfahren gemäß einem der vorhergehenden Ansprüche, **dadurch gekennzeichnet, dass** man die Niederschlagsrate R(r) aus der Relation

$$R = c[N_0^*]^{(1-d)} \cdot K^d.$$

bestimmt, wobei c und d Parameter sind und wobei $N_0^*$ gegeben ist durch:

$$N_0^* = \left[ a^{-1} \frac{K(r_0)}{Z^b(r_0) + K(r_0)I(r_1,r_0)} \right]^{\frac{1}{1-b}}.$$

4. Verfahren gemäß Anspruch 1, **dadurch gekennzeichnet, dass** man die abgeschwächte Reflektivität Z für beide der Polarisationen H und V misst, und dadurch, dass man für beide dieser Polarisationen die Niederschlagsrate R (r) für eine gegebene Strahlstrecke r bestimmt.

5. Verfahren gemäß einem der vorhergehenden Ansprüche, **dadurch gekennzeichnet, dass** man eine Eichung durch Vergleich geschätzter Histogramme mit einem realen Histogramm einsetzt.

**6.** Verfahren gemäß einem der Ansprüche 1 bis 4, **dadurch gekennzeichnet, dass** man eine Eichung durch Zentrieren eines Histogramms auf den Wert von Marshall und Palmer einsetzt.

**7.** Verfahren gemäß einem der vorhergehenden Ansprüche, **dadurch gekennzeichnet, dass** man eine Eichung durch statistischen Vergleich von zwei unabhängigen Schätzern der Niederschlagsrate verwendet.

**8.** Vorrichtung zur Schätzung einer Niederschlagsrate, welche ein bipolares Radar sowie Behandlungsmittel umfasst, **dadurch gekennzeichnet, dass** das Radar Mittel zum Messen der differentiellen Phase $\Phi dp$ und der abgeschwächten Reflektivität Z gemäß wenigstens der einen der Polarisationen H oder V umfasst und dadurch, dass die Behandlungsmittel die verschiedenen Behandlungsschritte des Verfahrens gemäß einem der vorhergehenden Ansprüche einsetzen.

FIG_1a

FIG_1b

FIG_2

BANDE X     NO constant=    8000.

FIG.3a

FIG.3b

Corr. Coeff. =     0.994309
Bicis=     3.41846 mm/h

FIG.3c

RESTITUTION    BANDE X    NO constant=    800.

FIG.4a

FIG.4b

Corr. coeff.=    0.993651
Biais=    3.07203 mm/h

FIG.4c

RESTITUTION    BANDE X    NO constant= 80000.

FIG_5a

FIG_5b

Corr. coeff = 0.977235
Bials = .31130 mm/c

FIG_5c

FIG.6

RESTITUTION    BANDE X    NO variable

FIG.7a

FIG.7b

Corr. coeff.=    0.957295
Biais=    1.96523 mm/h

FIG.7c

RESTITUTION   BANDE X   NO constant=   8000.   +BIAIS abs 2dt

FIG.8a

FIG.8b

FIG.8c

FIG.9a

FIG.9b

FIG.9c

RESTITUTION    BANDE X    NO constant =    8000.    ÷ BIAIS rel 02

FIG.10a

FIG.10b

FIG.10c

Corr. coeff = 0.991573

Biais = 5.56952 mm/h

RESTITUTION     BANDE X     NO constant =     8000.     +BIAIS rel 05dt

FIG.11a

FIG.11b

Corr. coeff = 0.991687
Biais= 2.35954 mm/h

FIG.11c

23

RESTITUTION     BANDE X     NO constant=    8000.

FIG.12a

FIG.12b

FIG.12c

RESTITUTION    BANDE X    NO constant=    8000.

FIG.13a

FIG.13b

FIG.13c

FIG.14a

FIG.14b

FIG.14c

(a)

DARWIN   19 JAN 1998   22:40   elev. 1.6°   Zatt+0dB

FIG.15a

(b)

DARWIN   19 JAN 1998   22:40   elev. 1.6°   Zatt+1dB

FIG.15b

(c)

DARWIN   19 JAN 1998   22:40   elev. 1.6°   Zatt-1dB

FIG.15c

FIG_15d

corr. coef = 0.974871
rms = 0.113082
biais= 0.0508960
$R_{zdr} = 1.12 \, R_{zpni}$

FIG_16a

Zatt+1dB

corr. coei = 0.971182
rms = 0.133627
biais= 0.0823823
$R_{zdr} = 1.21 \; R_{zphi}$

$R_{zphi}$ (mm h$^{-1}$)

## FIG_16b

Zatt-1dB

corr. coei = 0.974901
rms = 0.100086
biais= 0.00882150
$R_{zdr} = 1.02 \; R_{zphi}$

$R_{zphi}$ (mm h$^{-1}$)

## FIG_16c